# EUROPEAN PATENT APPLICATION

(11) **EP 2 023 673 A1**
(43) Date of publication of application: **11.02.2009**
(21) Application number: 07015715.1
(22) Date of filing: 09.08.2007
(51) Int. Cl.: H04W 4/00

(54) **Method for ensuring data continuity in a radio communications system and access node thereof**

(71) Applicant: Nokia Siemens Networks Oy, 02610 Espoo (FI)
(72) Inventor: Eilts, Hinrich, Dr., 81379 München (DE)
(74) Representative: Schober, Ralf Stefan

(57) **Abstract**

Method and Access Node for enabling data to be combined at an access node (100-1, 100-2) in a mobile communications system (1000) comprising the steps of:
- receiving at a first network node (200) a message by a user equipment (10-1) requesting a new access node (100-2);
- determining upon reception of said message by said first network node (200) of at least a first path and a second path over which data is to be split into data units and transmitted to said user equipment;
- tagging data to be transmitted over said at least first path, said tagging indicating an end of data being transmitted over said first path;
- receiving at said new access node (100-2) said data units transmitted over said first path and said second path, and
- detecting upon reception of said data by said new access node (100-2) said tagging, wherein upon detecting said tagging said new access node (100-2) combines said data in an orderly sequence of data units prior to transmittal to said user equipment (10-1).

## Description

### Field of the invention

The invention is used in radio communications systems to ensure that the data continuity during a communication is maintained during a handover operation.

### Summary of the invention

A handover or handoff operation (HO) is a very important function in existing mobile communications systems, whereby a mobile terminal (MT) or user equipment (UE) changes its point of attachment (PA). A skilled person in the art will appreciate that other terms are equivalent and interchangeable and can be used instead of PA, such as "access point (AP)", "base station (BS)", "access node (AN)", "network node (NN)" or the like.

One of the most important aspects of a HO is maintaining connectivity of the MT or UE throughout the complete operation without the connectivity being lost.

In addition, a further aspect is to ensure that during the switch from one point of attachment to another no data being transmitted is lost. Lost data will cause the MT to request retransmissions of the lost data. Consequently the amount of signalling in the mobile communications system will increase. This in turn reduces the bandwidth available and results in a reduction of the overall efficiency of the mobile communications system.

Data being transmitted in mobile communications systems can be a combination of different types of data content, for example data having a multimedia content, a voice content. Furthermore, each one of these types will have different quality of service (QoS) requirements. Loss of data during an HO severely reduces the efficiency of the overall transmission and increases the amount of time and bandwidth required to ensure that any lost data is recovered.

A further issue that can occur during an HO is that data is not lost but that due to the HO it is temporarily split between the original point of attachment and the target point of attachment. When this occurs, data relating to a UE exists but in two different locations and is transferred over two different branches or paths towards the UE. As each branch preserves the order in which data is being transmitted, data can arrive at the UE at some point in time completely out of order. In order now for the data to be re-ordered or placed in the correct sequence, the UE will need to use complex mechanisms and if necessary request retransmissions of the sequences of data if re-ordering can not be achieved. Such operations reduce the amount of bandwidth and processing resources available as well as increasing the amount of time taken for data to be ready for delivery to a user, thus reducing the efficiency of the mobile communications system.

One solution known in the art is to accompany the flow or stream of transmitted data with sequence numbers from the beginning of a transmission, so that if and when a split occurs the apparatus that then combines the data, will then use this numbers to recombine the data. However this has the drawbacks that each piece of transmitted data, for example a packet or cell, needs to be numbered which increases the amount of overhead and that the re-ordering mechanism is quite complex which increases the amount of processing time and allocation of processing resources.

Another solution known in the art is to determine which of the two branches is the inactive one, by using a timeout period. An in-active branch is determined when no data is received over it after the expiry of the timeout period. However this has the drawback that data forwarding stops during the complete timeout period, while the determination is being made and only after the expiry will it start again for the active branch. This increases the time that the mobile communications system has to wait before transmissions can continue and reduces the quality of service offered.

A need therefore exists for a technique that resolves the above mentioned drawbacks, reduces overhead and the need for the necessity of complex mechanisms for recombining the sequence of data and allows for the re-arrangement of data in a simple and efficient manner without any reduction in QoS to the data being transmitted.

With the present invention the above mentioned problems are resolved. The proposed technique allows for data to be combined in the correct order in an efficient manner without the drawbacks of the current solutions known in the art.

The technique is achieved by the teachings contained in the independent claims.

Said independent method claim enables data to be combined at an access node in a mobile communications system comprising the steps of:
- receiving at a first network node a message by a user equipment requesting a new access node;
- determining upon reception of said message by said first network node of at least a first path and a second path over which data is to be split into data units and transmitted to said user equipment;
- tagging data to be transmitted over said at least first path, said tagging indicating an end of data being transmitted over said first path;
- receiving at said new access node said data units transmitted over said first path and said second path, and
- detecting upon reception of said data by said new access node said tagging, wherein upon detecting said tagging said new access node combines said data in an orderly sequence of data units prior to transmittal to said user equipment.

Said independent access node claim has means arranged to enable data in a mobile communications system to be combined according to claim 1.

Further advantages and modifications can be seen in the dependent claims, whereby:
The tagging is added to a last data unit transmitted over the first path or the tagging is added to an additional data unit transmitted after the last data unit is transmitted over the first path, the additional data unit having no payload, so as not to increase the amount of overhead. The tagging can be a general packet radio service tunnelling protocol header extension or a general packet radio service tunnelling protocol sequence number. Furthermore, the tagged data is transmitted over at least one of the following interfaces: an S1 interface, an X2 interface.

### Short description of the drawings

The present invention will become more fully apparent from the detailed description given herein below and the accompanying drawings which are given by way of illustration only, and thus are not limitative of the present invention, and wherein:
Fig.1 depicts a mobile communications system 1000 in which the inventive technique is implemented.
Fig. 2a and 2b depict a more detailed view of the inventive technique.
Fig. 3 depicts a flow chart showing the steps performed by the inventive technique.
Fig. 4 depicts the blocks that comprise an access node in the proposed invention.

### Detailed description of the invention

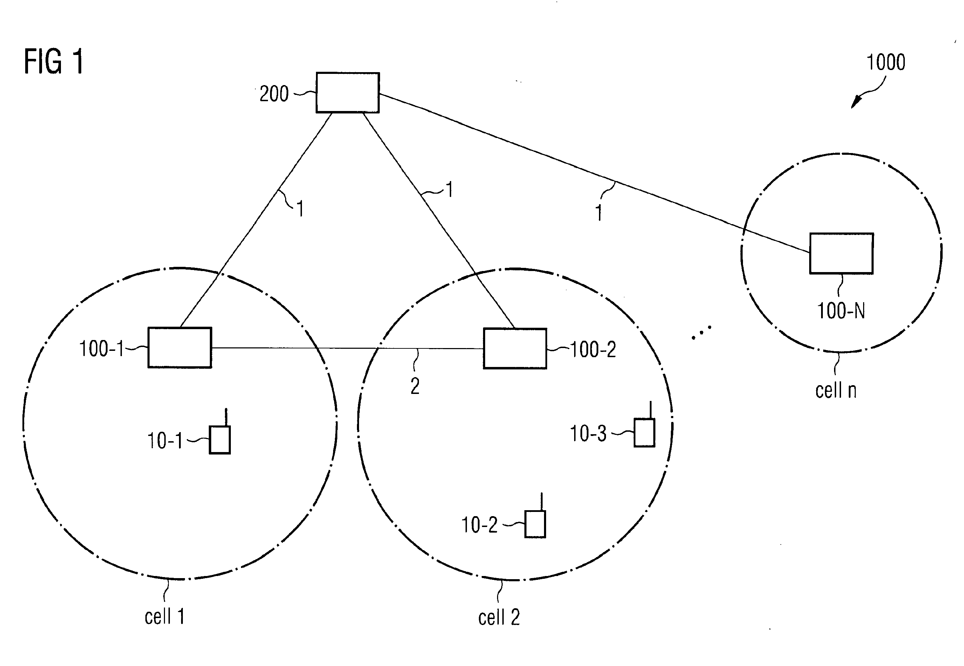

Fig.1 depicts a mobile communications system 1000 in which the inventive technique is implemented. Mobile communications system 1000 is divided into a plurality of cells cell1, cell2, ...cellN. Each cell comprises of a plurality of access nodes 100-1, 100-2 ... 100-N, which can be at least one of the following: a base station (BS), a nodeB (NB), an enodeB (eNB), a base station controller (BSC), a radio network controller (RNC). In addition mobile communications system 1000 comprises of a plurality of UEs 10-1,... 10-3, which can be at least one of the following: a mobile terminal, a mobile telephone, a mobile computer. Data being transmitted within mobile communications system 1000 is transmitted using data units, these being at least one of the following: a packet, a cell, a frame.

Each access node 100-1, 100-2 ... 100-N is controlled by a further network node 200. Depending on the architecture of mobile communications system 1000 more than one further network nodes 200 can be used to control network apparatuses 100-1, 100-2 ... 100-N. Network node 200 can be a Serving Gateway (S-GW) or an access Gateway (aGW). For ease of understanding of the inventive technique only one is depicted in fig. 1. Furthermore, mobile communications system 1000 can be at least one of the following: a 3G (3^{rd} Generation) mobile communications system, a 4G (4^{th} Generation) mobile communications system, a 3^{rd} Generation Partnership Project Long Term Evolution (3GPP LTE) mobile communications system and can use a number of mobile technologies, for example UMTS (Universal Mobile Telecommunications System) technologies.

Network node 200 communicates with access node 100-1, 100-2 ... 100-N via a link 1. In particular link 1 uses an S1 interface according to Technical Recommendation (TR) 125.912 version 7.10 (2006-09) to communicate between the nodes. Access nodes 100-1, 100-2,..., 100-N communicate between themselves over link 2. In particular link 2 uses an X2 interface according to Technical Recommendation (TR) 125.912 version 7.10 (2006-09).

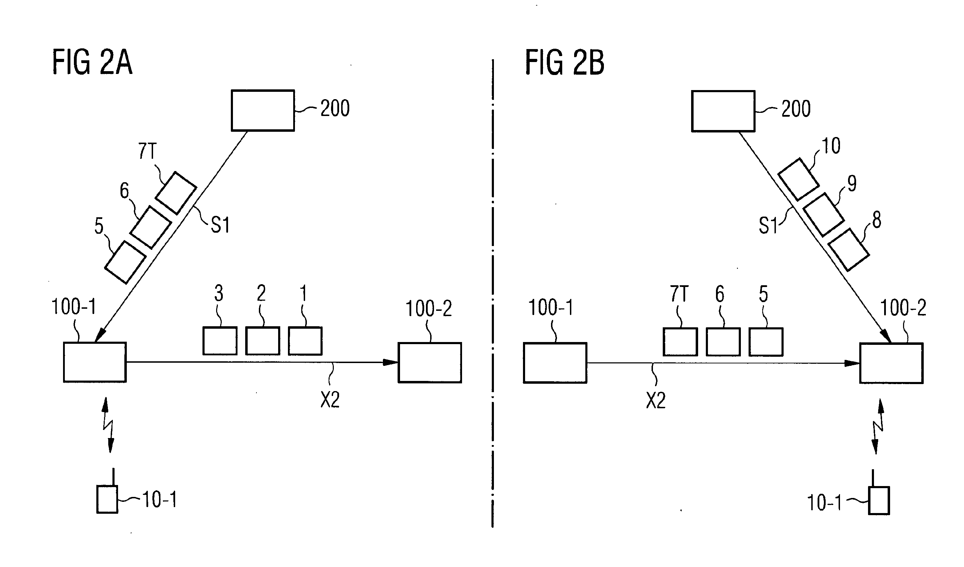

Fig. 2a and 2b depict a more detailed view of the inventive technique. In fig. 2a, a user equipment (UE) 10-1 is attached to access node 100-1. At a point in time UE 10-1 requests an HO. The message requesting an HO is received by the serving access node 100-1 and then transmitted to network node 200. Network node 200 then determines the paths or branches over which the data units comprising the data being transmitted to UE 10-1 need to be split. This is necessary as during the HO any on-going communications must not be impacted but transferred seamlessly from the serving access node 100-1 to a new or target access node 100-2.

In this illustrative example at least two paths over which the data units comprising the data transmitted are determined. A first path from network node 200 via access node 100-1 to access node 100-2 and a second path from network node 200 to access node 100-2. Depending on the location of the access nodes and the HO, more than two paths can be determined.

According to the inventive technique, once the paths have been determined, network node 200 tags data to be transmitted over the first path. The tagging indicates the end of data being transmitted over the first path, i.e. the tag indicates the last data unit being transmitted over the first path. The tag is added to a last data unit transmitted over the first path or it is added to an additional data unit transmitted after the last data unit over the first path, the additional data unit having no payload, so as not to increase the overhead.

The tagging applied by network node 200 can be a general packet radio service tunnelling protocol (GTP) header extension as defined in TS 29.060 or a general packet radio service tunnelling protocol sequence number. The tagged data is transmitted over at least one of the following interfaces: the S1 interface between network node 200 and access node 100-1, an X2 interface between network node 200 and access node 100-2.

In this manner, data units 1, 2, 3, 4, 5, 6, 7T are transmitted over the first path towards access node 100-2. The last data unit being transmitted 7T is tagged so that when it is received and detected at access node 100-2, access node 100-2 is aware that no further data units will arrive from access node 100-1 destined for UE 10-1. Data units 8, 9, 10 are transmitted over the second path towards access node 100-2. As the order or sequence of the data units being transmitted is maintained independently in both paths, once access node 100-2 detects data unit 7T it will then be possible to combine all the received data units in an orderly or correct sequence prior to transmittal to said user equipment (10-1). In this manner, as the tagged data unit 7T indicates that no further data units will be received over the X2 interface, all data units received over the S1 interface are to be reassembled after data unit 7T.

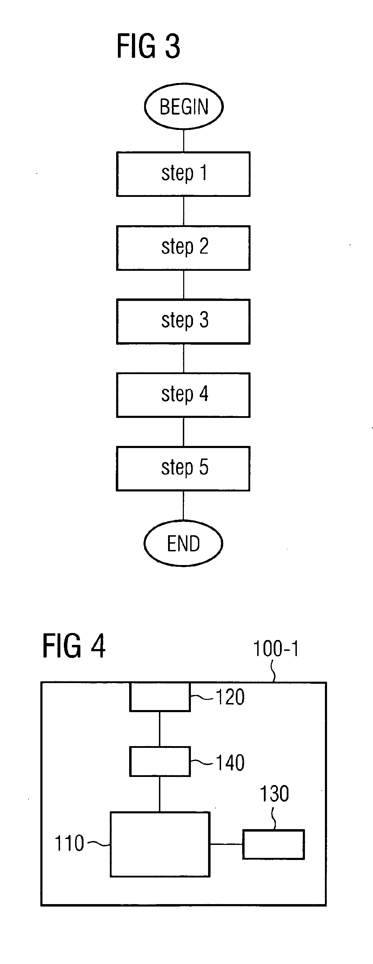

Fig. 3 depicts a flow chart showing the steps performed by the inventive technique.

In step 1 a first network node 200 receives a message by a user equipment 10-1 requesting a handover to a new access node 100-2. In step 2, the first network node 200 upon reception of the message determines at least a first path and a second path over which data is to be split into data units and transmitted to the user equipment 10-1. In step 3, the first network node 200 tags data to be transmitted over the first path, the tagging indicating an end of data being transmitted over the first path. In step 4, the new access node 100-2 receives the data units transmitted over the first path and said second path and in step 5 the new access node 100-2 detects upon reception of the data the tagging. Upon detecting the tagging the access node 100-2 combines the received data in an orderly sequence of data units prior to transmittal to said user equipment 10-1.

The steps of the inventive technique can be implemented as a software programme stored on an access node 100-1, 100-2 and on a network node 200 completely or partially depending on the functionality to be provided to each node.
A microprocessor on each node 100-1, 100-2, 200 can be arranged to execute the different steps.

Fig. 4 depicts the blocks that comprise an access node in the proposed invention. Access node 100-1, 100-2,..., 100-N is arranged to execute the steps of the inventive method. It comprises of control means 110 arranged to control the access node, transceiver means 120 arranged to transmit and/or receive transmissions from other network devices such as access nodes 100-1, 100-2,..., 100-N, network nodes 200, UEs 10-1, 10-2, 10-3. Transceiver means 120 are further arranged to transmit and/or receive transmissions over different interfaces, for example an X2 interface, an S1 interface, an air interface.
Access node 100-1, 100-2,..., 100-N further comprises of storage means 130 arranged to store the programme of the inventive technique. Storage means 130 can be amongst others a memory chip or a database.

Access node 100-1, 100-2,..., 100-N further comprises of detecting means 140 arranged to detect tags on data units being received by the access node 100-1, 100-2,..., 100-N. The detecting means 140 are further arranged to detect tags that are a general packet radio service tunnelling protocol header extension or a general packet radio service tunnelling protocol sequence number.

Control means 110 are further arranged upon detection by the detecting means 140 of the tagging to combines the received data in an orderly sequence of data units prior to transmittal, via transceiver means 120, to UE 10-1.

Although the invention has been described in terms of a preferred embodiment described herein, those skilled in the art will appreciate other embodiments and modifications which can be made without departing from the scope of the teachings of the invention. All such modifications are intended to be included within the scope of the claims appended hereto.

## Claims

1. Method for enabling data to be combined at an access node (100-1, 100-2) in a mobile communications system (1000) comprising the steps of:
- receiving at a first network node (200) a message by a user equipment (10-1) requesting a new access node (100-2);
- determining upon reception of said message by said first network node (200) of at least a first path and a second path over which data is to be split into data units and transmitted to said user equipment;
- tagging data to be transmitted over said at least first path, said tagging indicating an end of data being transmitted over said first path;
- receiving at said new access node (100-2) said data units transmitted over said first path and said second path, and
- detecting upon reception of said data by said new access node (100-2) said tagging, wherein upon detecting said tagging said new access node (100-2) combines said data in an orderly sequence of data units prior to transmittal to said user equipment (10-1).

2. Method according to claim 1, wherein said tagging is added to a last data unit transmitted over said first path.

3. Method according to claim 1, wherein said tagging is added to an additional data unit transmitted after a last data unit over said first path, said additional data unit having no payload.

4. Method according to any one of the previous claims 1 to 3, wherein said tagging can be a general packet radio service tunnelling protocol header extension or a general packet radio service tunnelling protocol sequence number.

5. Method according to any one of the previous claims 1 to 4, wherein at least two different interfaces are used for said first and second paths.

6. Method according to any one of the previous claims 1 to 5, wherein said at least two interfaces are an S1l interface and an X2 interface.

7. Access node (100-1, 100-2) having means arranged to enable data in a mobile communications system (1000) to be combined according to claim 1.

8. Access node (100-1, 100-2) according to claim 7, wherein said access node is at least one of the following: a base station, a nodeB, an enodeB, a base station controller, a radio network controller.

9. Mobile communications system (1000) comprising at least one access node (100-1, 100-2) according to claims 6 to 8.

10. Mobile communications system (1000) according to claim 9 wherein said mobile communications system (1000) is at least one of the following: a 3^{rd} Generation mobile communications system, a 4^{th} Generation mobile communications system, a 3^{rd} Generation Partnership Project Long Term Evolution mobile communications system.
